# FASCICULE DE BREVET EUROPEEN

(11) **EP 4 495 424 B1**
(45) Date de publication et mention de la délivrance du brevet: **03.06.2026**
(21) Numéro de dépôt: 24168190.7
(22) Date de dépôt: 03.04.2024
(51) Int. Cl.: F04B 15/08, F04B 39/00, F04B 53/14

(54) **APPAREIL DE COMPRESSION DE FLUIDE ET STATION DE REMPLISSAGE**
FLÜSSIGKEITSVERDICHTUNGSVORRICHTUNG UND FÜLLSTATION
FLUID COMPRESSION APPARATUS AND FILLING STATION

(30) Priorité: 18.07.2023 FR 2307684
(43) Date de publication de la demande: 22.01.2025
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: BENISTAND-HECTOR, Cyril, 38360 Sassenage (FR); GUTIEREZ, Javier, 47877 WILLICH (DE)
(74) Mandataire: Air Liquide

(56) Documents cités:
- FR-A- 783 104
- FR-A1- 3 107 573
- FR-A1- 3 123 094
- US-A1- 2007 028 628
- US-A1- 2021 332 950

## Description

L'invention concerne un appareil de compression de fluide et une station de remplissage.

L'invention concerne plus particulièrement un appareil de compression de fluide, en particulier de fluide cryogénique, comprenant une chambre de compression, un système d'admission communiquant avec la chambre de compression, un piston comprenant un corps axial mobile en translation selon une direction longitudinale pour assurer la compression du fluide dans la chambre de compression, le piston étant mobile par rapport à une structure fixe de l'appareil, l'appareil comprenant un orifice d'évacuation communiquant avec la chambre de compression et configuré pour permettre la sortie de fluide comprimé, le corps du piston comprenant une portion tubulaire montée autour d'un guide central fixe relié à la structure fixe, l'appareil comprenant un système d'étanchéité formé entre le guide central et la portion tubulaire du piston, la chambre de compression étant délimitée par la portion tubulaire du piston et une extrémité terminale du guide central.

Les architectures de pompes cryogéniques connues sont relativement complexes et/ou nécessitent un nombre relativement important de pièces et/ou peuvent générer des usures de pièces prématurées.

En particulier, l'agencement relatif des parties mobiles (piston) et fixes (structure fixe) nécessite des montages complexes. Des solutions connues utilisent un plateau formant un support pour le piston. Le plateau est traversé une ou plusieurs fois par des axes afin de transmettre les efforts depuis l'actionneur (moteur généralement en partie haute) jusqu'à la chemise ou le piston (généralement en partie basse).

Le document FR3107573A1 décrit un exemple de dispositif de pompage de l'art antérieur. Un but de la présente invention est de pallier tout ou partie des inconvénients de l'art antérieur relevés ci-dessus.

À cette fin, l'invention propose un appareil tel que défini dans la revendication 1. En particulier, lors des mouvements de translation du piston, le corps du piston coulisse autour de la pièce support sans passer au travers de la pièce support.

Cet agencement est relativement simple et permet de garantir un très bon alignement des pièces. Ceci permet d'améliorer la durée de vie des pièces d'usure (joints, joints racleurs, bagues de guidage).

Cet agencement permet un assemblage simple, fiable, reproductible de l'ensemble des pièces. Par ailleurs, des modes de réalisation de l'invention peuvent comporter l'une ou plusieurs des caractéristiques suivantes :
- l'ouverture longitudinale du piston est délimitée par une portion du corps du piston en forme de fourche à plusieurs branches, l'ouverture longitudinale étant formée par l'espacement entre les branches,
- la pièce support s'étend transversalement à la direction longitudinale entre deux extrémités latérales faisant saillie au-delà-du corps du piston, les deux extrémités latérales de la pièce support étant reliées chacune à la structure,
- le guide central est monté solidaire de la pièce support par l'un au moins parmi : un vissage, un emboîtement, une déformation élastique, la pièce support étant rendue solidaire de la structure fixe, par exemple par butée, emboîtement, serrage ou vissage,
- la pièce support est maintenue fixe longitudinalement dans la structure entre deux butées de maintien longitudinal situées de part et d'autre de la pièce support selon une direction longitudinale,
- la structure comprend deux portions de boîtier tubulaires assemblées longitudinalement l'une à l'autre autour du piston,
- l'une au moins des deux portions de boîtier tubulaires forme une butée de maintien longitudinal à une extrémité longitudinale de la pièce support,
- l'appareil comporte une entretoise montée autour du corps du piston, l'entretoise étant disposée entre le corps du piston et l'une au moins des deux portions de boîtier tubulaires, l'entretoise formant une butée de maintien longitudinal à une extrémité longitudinale de la pièce support,
- la pièce support est maintenue fixe transversalement à la direction longitudinale par une butée de maintien transversal formée par la structure,
- l'orifice d'évacuation est situé au niveau de l'extrémité terminale du guide central, l'appareil comprenant un circuit d'évacuation du fluide comprimé comprenant une première extrémité reliée à l'orifice d'évacuation et une seconde extrémité située de façon opposée à la première extrémité selon la direction longitudinale, le circuit d'évacuation du gaz comprimé transitant via le corps du guide central et la pièce support,
- le corps du piston est composé en plusieurs parties assemblées longitudinalement l'une à l'autre de façon démontable,
- la portion tubulaire et la portion en forme de fourche du corps du piston sont assemblées longitudinalement l'une à l'autre de façon démontable, par exemple par vissage,
- l'appareil est du type à deux étages de compression et comprend une chambre de pré-compression, un système de pré-admission communiquant avec la chambre de pré-compression configuré pour permettre l'entrée de fluide dans la chambre de pré-compression, le système d'admission communiquant avec la chambre de pré-compression pour assurer le transfert de fluide comprimé dans la chambre de pré-compression vers la chambre de compression en vue d'une compression supplémentaire,
- l'appareil comprend une enceinte étanche reliée à la structure et configurée pour contenir un bain de fluide cryogénique comportant une phase liquide et un ciel gazeux, la chambre de compression étant logée dans l'enceinte pour être immergée dans le bain,
- selon la direction longitudinale de translation du piston, le système de pré-admission est situé à une première extrémité de l'appareil, de préférence inférieure, l'orifice d'évacuation étant situé à une seconde extrémité de l'appareil, de préférence supérieur, le système de pré-d'admission comprend une ou plusieurs lumières assurant ou non une communication entre la chambre de pré-compression et de bain à l'extérieur selon la position longitudinale du piston,
- la ou les lumières sont agencées pour permettre, lorsque le piston les dépasse, c'est-à-dire lorsque le piston est situé au-delà d'au moins une partie de la ou des lumières, la communication entre la chambre de pré-compression et le bain extérieur, en phase d'admission lorsque le volume de la chambre de pré-compression s'agrandit, la ou les lumières sont configurées pour permettre à du gaz éventuellement présent dans la chambre de pré-compression de s'échapper par la ou les lumières vers le bain extérieur et laisser sa place à du liquide, en phase de compression, c'est-à-dire lorsque le piston diminue le volume de la chambre de pré-compression, la ou les lumières sont configurées pour laisser échapper le surplus de liquide et doser le volume de liquide emprisonné dans la chambre de pré-compression à une valeur déterminée avant de ne plus communiquer avec la première chambre de pré-compression,
- le système d'admission comprend au moins l'un parmi: un ou plusieurs clapets anti-retour, au moins un clapet à disque plat ou vanne(s) configurés pour assurer l'entrée de fluide à comprimer dans la chambre de compression (chambre de pré-compression) lors d'une phase d'admission et empêcher la sortie de fluide en phase de compression.

L'invention concerne également une station de remplissage de réservoirs ou de conduites de gaz sous pression comprenant une source de gaz liquéfié, notamment d'hydrogène liquéfié, un circuit de soutirage ayant une première extrémité reliée à la source et au moins une seconde extrémité destinée à être raccordée à un réservoir à remplir, le circuit de soutirage comprenant un appareil de pompage ou un appareil de compression de fluide conforme à l'une quelconque des caractéristiques ci-dessus ou ci-dessous.

L'invention peut concerner également tout dispositif ou procédé alternatif comprenant toute combinaison des caractéristiques ci-dessus ou ci-dessous dans le cadre des revendications. D'autres particularités et avantages apparaîtront à la lecture de la description ci-après, faite en référence aux figures dans lesquelles :

### Brève description des figures

L'invention sera mieux comprise à la lecture de la description qui va suivre donnée uniquement à titre d'exemple et faite en se référant aux dessins annexés dans lesquels :
[Fig. 1] est une vue en coupe verticale, schématique et partielle, et selon un premier plan de coupe, d'un appareil de compression de fluide selon un premier mode de réalisation,
[Fig. 2] est une vue en coupe verticale, schématique et partielle, et selon un deuxième plan de coupe perpendiculaire au premier plan de coupe, de l'appareil de compression de fluide de la [Fig. 1],
[Fig. 3] est une vue en perspective, schématique et partielle, de l'appareil de compression de fluide de la [Fig. 1] en configuration démontée,
[Fig. 4] est une vue en coupe verticale, schématique et partielle, et selon un premier plan de coupe, d'un détail de l'appareil de compression de fluide partiellement démonté,
[Fig. 5] est une vue en coupe verticale, schématique et partielle, et selon un deuxième plan de coupe d'un détail de l'appareil de compression de fluide partiellement démonté,
[Fig. 6] est une vue en coupe verticale, schématique et partielle, et selon un premier plan de coupe, d'un appareil de compression de fluide selon un second mode de réalisation,
[Fig. 7] est une vue schématique et partielle d'un exemple de station de remplissage de réservoir.

### Description détaillée

Sur toutes les figures, les mêmes références se rapportent aux mêmes éléments.

Dans cette description détaillée, les réalisations suivantes sont des exemples. Bien que la description se réfère à un ou plusieurs modes de réalisation, cela ne signifie pas que les caractéristiques s'appliquent seulement à un seul mode de réalisation. De simples caractéristiques de différents modes de réalisation peuvent également être combinées et/ou interchangées pour fournir d'autres réalisations.

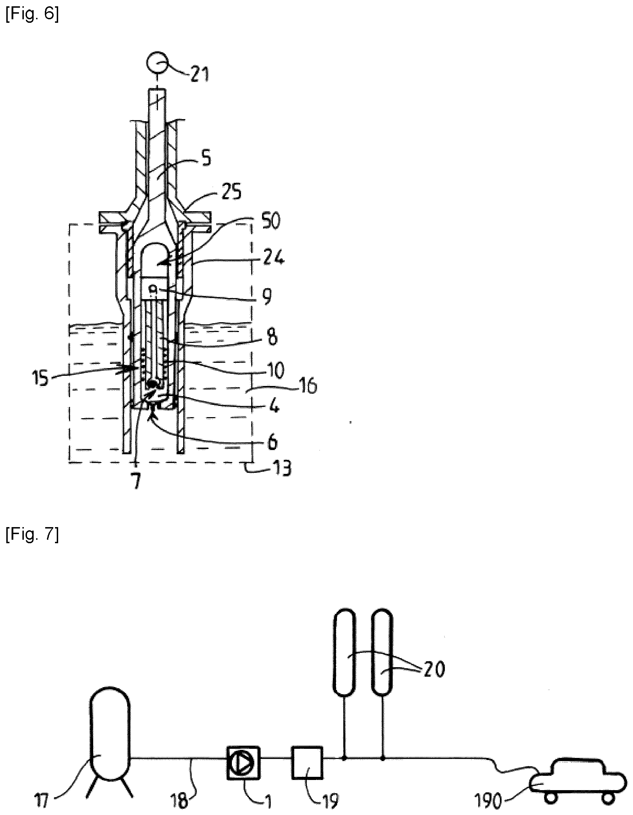

L'appareil 1 de compression de fluide illustré à la [Fig. 6] est un exemple de réalisation à un étage de compression. Cet appareil 1 de compression est par exemple une pompe pour pomper un fluide cryogénique, par exemple de l'hydrogène liquide de préférence à haute pression (typiquement plusieurs centaines de bar).

L'appareil 1 de compression comprend une chambre 4 de compression, un système 6 d'admission communiquant avec la chambre 4 de compression et un piston 5 comprenant un corps axial mobile en translation selon une direction A longitudinale dont une extrémité assure la compression du fluide dans la chambre 4 de compression.

L'appareil 1 possède une structure 24, 25 fixe qui porte l'essentiel des pièces fixes et mobiles et notamment une enceinte 13 étanche reliée à la structure 24, 25 et configurée pour contenir un bain 16 de fluide cryogénique comportant une phase liquide et un ciel gazeux. La chambre 4 de compression est logée dans l'enceinte 13 pour être immergée dans le bain 16.

Comme illustré, la structure peut comprendre deux portions 24, 25 de boîtier tubulaires (ou manchons) assemblées longitudinalement l'une à l'autre hermétiquement autour du piston 5, par exemple par vissage.

Le piston 5 est mobile en translation dans la structure selon la direction A longitudinale dans un mouvement alternatif. Le piston 5 est par exemple déplacé via un actionneur 21 (moteur éventuellement associé à un système de transformation de mouvement). L'actionneur 21 est de préférence situé en partie supérieure de l'appareil 1, par exemple monté sur la structure.

Tout type d'actionneur 21 peut être envisagé : un actionneur linéaire, par exemple un vérin hydraulique, un vérin électromécanique, une vis à bille, une vis à rouleaux ou bien par un système à conversion de mouvement de type bielle manivelle lui-même entraîné par un motoréducteur, un moteur et une courroie ou encore un moteur à entraînement direct.

L'appareil 1 de compression comprend un orifice 7 d'évacuation communiquant avec la chambre 4 de compression et configuré pour permettre la sortie de fluide comprimé. Le corps du piston 5 comprend une portion tubulaire 15 montée autour d'un guide 8 central fixe. Le guide 8 central, par exemple cylindrique, est relié à la structure 24, 25.

Un système d'étanchéité 10 est prévu entre le guide 8 central et la portion tubulaire 15 du piston 5. Ce système d'étanchéité comprend un ensemble de joint(s), par exemple un ensemble de joints toriques, et peut être associé à une ou plusieurs bagues de guidage de la portion tubulaire 15 par rapport au guide central.

La chambre 4 de compression est ainsi délimitée par la portion tubulaire 15 du piston 5 et une extrémité terminale du guide 8 central.

Comme illustré, l'intégralité de la chambre 4 de compression peut être contenue dans la portion tubulaire du piston 5.

Comme illustré, en position d'utilisation, le piston 5 est de préférence vertical, le système d'admission 6, l'orifice 7 d'évacuation, la sortie du fluide comprimé et l'actionneur sont placés dans cet ordre de bas en haut.

L'orifice 7 d'évacuation est situé de préférence au niveau de l'extrémité terminale inférieure du guide 8 central. L'appareil 1 comprend un circuit 11 d'évacuation du fluide comprimé comprenant une première extrémité reliée à l'orifice 7 d'évacuation et une seconde extrémité située de façon opposée à la première extrémité de l'appareil 1. Ce circuit 11 d'évacuation du gaz comprimé transite de préférence via l'intérieur du corps du guide 8 central et à travers une pièce 9 support via des canaux appropriés.

Dans cet exemple de réalisation non limitatif, la compression du fluide dans la chambre 4 de compression est obtenue par une remontée du piston 5 (effort de traction).

Comme schématisé, le guide 8 central est relié à la structure 24, 25 fixe via une pièce 9 support reçue dans une ouverture longitudinale 50 formée dans le corps un piston 5, 15 et permettant le coulissement longitudinal relatif du piston 5 autour de la pièce 9 support.

Lors des mouvements de translation du piston 5, le corps du piston 5 coulisse autour de la pièce support, sans passer au travers de la pièce support 9.

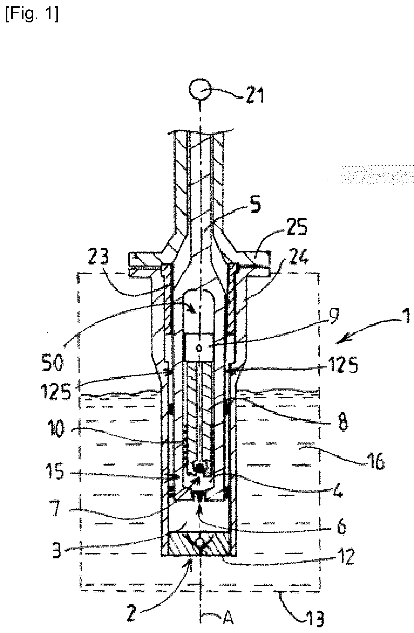

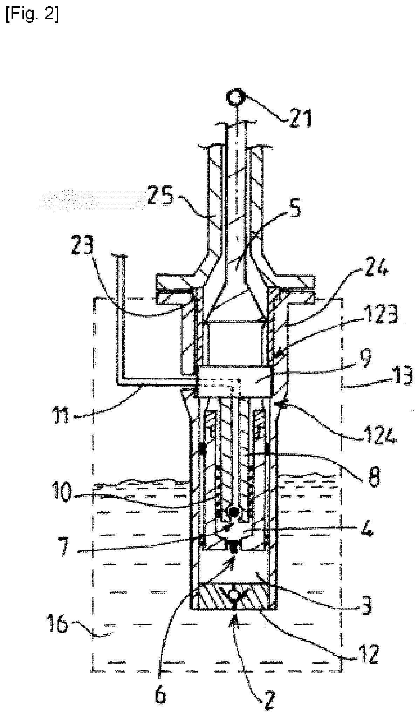

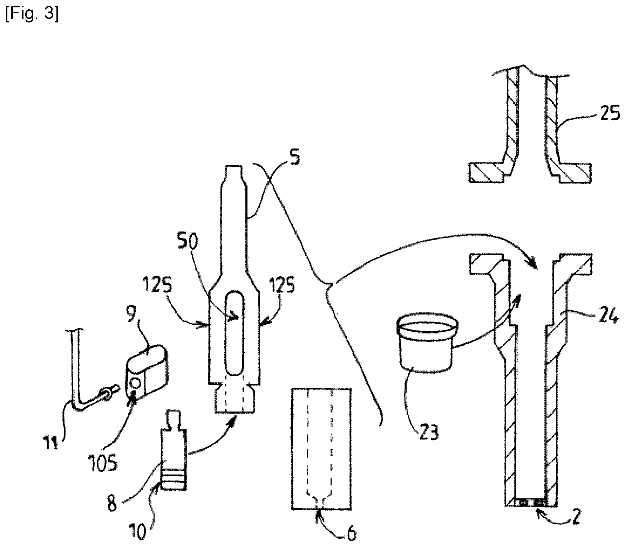

Ceci est également illustré aux [Fig. 1], [Fig. 2] et [Fig. 3] qui illustrent un autre mode de réalisation à deux étages de compression. Le mode de réalisation des [Fig. 1], [Fig. 2] et [Fig. 3] se distingue de celui de la [Fig. 6] uniquement en ce qu'il est du type à deux étages de compression. Les mêmes éléments sont désignés par les mêmes références numériques et ne sont pas décrits en détail une seconde fois. Le mode de réalisation à deux étages de compression comprend une chambre 3 de pré-compression et un système 2 de pré-admission communiquant avec la chambre 3 de pré-compression configuré pour permettre l'entrée de fluide du bain 16 vers la chambre 3 de pré-compression.

Dans cette configuration, la chambre 3 de pré-compression est délimitée à son extrémité inférieure par exemple par une bride 12 inférieure (ou obturateur) qui referme transversalement la portion tubulaire au niveau de son extrémité inférieure. Cette bride 12 peut comporter le système 2 de pré-admission (clapet(s) appropriés). Cette bride 12 inférieure peut comporter également un clapet de trop plein configuré pour limiter la montée en pression dans la chambre 3 de pré-compression. Cette bride 12 inférieure peut éventuellement servir au centrage de l'extrémité froide (ensemble des pièces mécaniques assemblées ici) par rapport à l'enceinte 13. Ceci peut être prévu pour assurer un alignement entre l'enceinte 13 et l'extrémité froide de la chambre de pré-compression via un organe de maintien de l'extrémité froide par rapport à l'enceinte 13 (et pour limiter d'éventuelles vibrations).

Le système 6 d'admission de la chambre 4 de compression communique avec la chambre 3 de pré-compression pour assurer le transfert de fluide comprimé dans la chambre 3 de pré-compression (premier étage de compression) vers la chambre 4 de compression en vue d'une compression supplémentaire (deuxième étage de compression).

Le premier étage de compression est obtenu dans cet exemple par une course du piston 5 vers le bas (compression du piston) tandis que le second étage de compression est obtenu par une course du piston 5 vers le haut (remontée en traction) et ainsi de suite.

Ainsi, l'extrémité inférieure du piston 5 forme une surface mobile de compression du fluide dans la chambre 3 de pré-compression tandis que la portion tubulaire du piston 5 forme une chemise mobile qui coopère avec l'extrémité terminale du guide 8 central pour former un système à compression du fluide dans la chambre 4 de compression dans lequel l'extrémité terminale du guide 8 central forme un piston fixe.

Ainsi, de préférence, la direction A longitudinale de translation du piston 5 est verticale, le système 2 de préadmission étant situé à une première extrémité inférieure de l'appareil 1, l'orifice 7 d'évacuation étant situé à une seconde extrémité supérieure de l'appareil 1.

De préférence, le système de pré-d'admission de fluide dans la chambre de pré-compression comprend une ou plusieurs lumières ou fentes formées dans la partie supérieure de la paroi délimitant la chambre de pré-compression (lumières non représentées par soucis de simplification) assurant ou non une communication entre la chambre 3 de pré-compression et de bain 16 à l'extérieur selon la position longitudinale du piston 5.

La ou les lumières peuvent être agencées longitudinalement pour permettre, lorsque le piston 5 les dépasse, c'est-à-dire lorsque le piston 5 est situé au-delà d'au moins une partie de la ou des lumières, la communication entre la chambre 3 de pré-compression et le bain 16 extérieur. En phase d'admission lorsque le volume de la chambre 3 de pré-compression s'agrandit, la ou les lumières sont configurées pour permettre à du gaz éventuellement présent dans la chambre 3 de pré-compression de s'échapper par la ou les lumières vers le bain 16 extérieur et laisser sa place à du liquide. En phase de compression, c'est-à-dire lorsque le piston 5 diminue le volume de la chambre 3 de pré-compression, la ou les lumières sont configurées pour laisser échapper le surplus de liquide et doser le volume de liquide emprisonné dans la chambre 3 de pré-compression à une valeur déterminée avant de ne plus communiquer avec la première chambre 3 de pré-compression.

Le système de pré-admission 2 et le système d'admission 6 peuvent comprendre au moins l'un parmi: un ou plusieurs clapets anti-retour, au moins un clapet à disque plat ou vanne(s) configurés pour assurer l'entrée de fluide à comprimer dans la chambre concernée (compression/pré-compression) lors d'une phase d'admission et empêcher la sortie de fluide en phase de compression.

Comme visible notamment à la [Fig. 2], l'ouverture longitudinale 50 du piston 5 qui reçoit la pièce support 9 peut être délimitée par une portion du corps du piston 5 en forme de fourche à deux branches 125. L'ouverture longitudinale 50 peut ainsi être formée par l'espacement entre les branches 125 parallèles.

La pièce 9 support peut ainsi s'étendre transversalement à la direction A longitudinale entre deux extrémités latérales faisant saillie au-delà-du corps du piston 5. Les deux extrémités latérales de la pièce 9 support peuvent être reliées ou fixée chacune à la structure 24, 25, de part et d'autre du corps du piston 5.

La pièce 9 support peut être maintenue fixe longitudinalement dans la structure 24, 25 entre deux butées 123, 124 de maintien longitudinal situées de part et d'autre de la pièce 9 support selon une direction A longitudinale. Par exemple, deux portions tubulaires 24, 25 (ou manchons) sont assemblées l'une à l'autre longitudinalement autour du piston 5. Ainsi la transmission de l'effort entre les pièces 8, 9, 24, 25 est optimisée.

L'une des portions de boîtier tubulaires (par exemple la portion inférieure 24) peut former une butée 124 de maintien longitudinal qui reçoit une extrémité longitudinale de la pièce 9 support (par exemple l'extrémité inférieure).

Comme illustré, une entretoise 23, par exemple tubulaire, peut être montée autour du corps du piston 5, entre le corps du piston 5 et l'une des deux portions 24, 25 de boîtier tubulaires (par exemple dans la portion 24 tubulaire inférieure). L'extrémité supérieure de l'entretoise 23 est par exemple en butée contre un épaulement formé par la portion 25 tubulaire supérieure. L'extrémité inférieure de l'entretoise 23 est par exemple en appui sur la portion supérieure de la pièce 9 support. Ainsi, la pièce 9 support est bloquée longitudinalement par la structure 24, 25 entre l'entretoise 23 et la portion 24 tubulaire inférieure.

L'entretoise 23 est ainsi logée au-dessus de la pièce support 9 et peut retenir cette dernière et de plus permet d'assurer le contre effort pour maintenir le guide 8 central fixe.

L'effort est ainsi transmis à la portion 25 supérieure du boîtier. Cette entretoise 23 permet également d'assurer le centrage entre le la portion de boîtier 25 supérieure et le la portion de boîtier 24 inférieure.

Dans l'exemple illustré, l'entretoise 23 a une forme d'un tube. Bien entendu, cette entretoise peut avoir d'autre géométrie, par exemple la forme générale d'un anneau, par exemple interposé entre la pièce support et l'une ou l'autre des portions 24, 25 de boîtier.

De même, l'entretoise 23 pourrait être omise. Dans ce cas, le blocage longitudinal de la pièce 9 support en partie supérieure pourrait être assuré, par exemple, par une portion 24 du boîtier tubulaire.

La pièce 9 support est bloquée transversalement à la direction A longitudinale par exemple par une portion 24 de boîtier tubulaire de la structure qui l'entoure.

La pièce 9 support peut ainsi être rendue solidaire de la structure 24, 25 fixe butée mais il est possible d'envisager également un emboîtement, serrage ou vissage par exemple.

Comme décrit plus en détail ci-après, le guide 8 central peut être monté solidaire de la pièce 9 support par l'un au moins parmi : un vissage, un emboîtement, une déformation élastique.

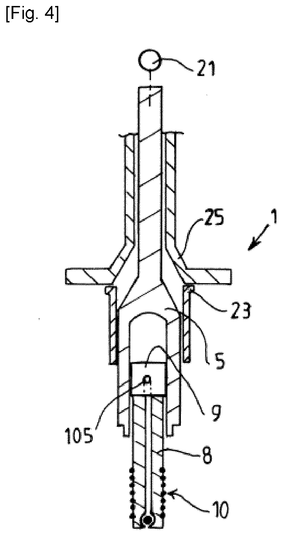

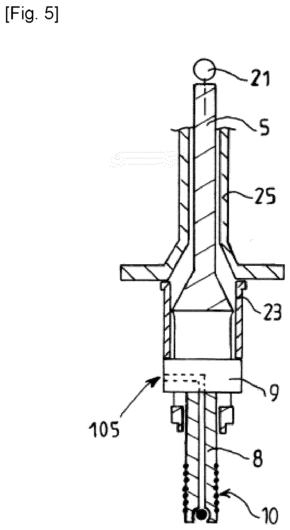

Comme illustré à la [Fig. 3] et aux [Fig. 4] et [Fig. 5], le corps du piston 5 peut être composé en plusieurs parties assemblées longitudinalement l'une à l'autre de façon démontable, par exemple par vissage.

Par exemple, la portion tubulaire 15 inférieure et la portion supérieure en forme de fourche du corps du piston 5 sont assemblées longitudinalement l'une à l'autre de façon démontable, par exemple par vissage. De même, la jonction entre la portion en forme de fourche et la portion pleine supérieure peuvent être assemblées de façon séparable.

Une telle architecture nécessite relativement peu de pièces et assure un fonctionnement fiable tout en permettant un montage et un démontage aisés.

Un exemple de montage des principaux constituants va à présent être décrit en référence à la [Fig. 3].

Dans une première étape, la pièce support 9 peut être insérée transversalement dans l'ouverture 50 longitudinale du piston 5.

Cette pièce support 9 peut être montée avec des plaques glissantes sur sa surface extérieure (plaque de cuivre avec revêtement PTFE par exemple) et avec suffisamment de jeu par rapport à l'ouverture longitudinale 50 pour assurer un glissement relatif entre les deux pièces 125 et 9. L'architecture permet un bon alignement des pièces selon la direction longitudinale qui assure et garantit une bonne étanchéité et une bonne durabilité des joints 10.

La pièce support 9 est de préférence montée également avec un jeu dans la portion 24 inférieure de boîtier pour assurer un alignement optimal entre les deux extrémités longitudinales du piston 5 lors de l'assemblage.

L'extrémité supérieure du guide 8 central peut être solidarisée de la pièce 9, par exemple par vissage, en passant au travers d'un passage (alésage par exemple) formé à l'extrémité inférieure de la portion en forme de fourche du piston 5. La portion tubulaire 15 formant l'extrémité inférieure du piston peut ensuite être montée autour du guide 8 central et être fixée à la portion supérieure en forme de fourche du piston 5.

Bien entendu, les deux portions supérieure et inférieure du piston peuvent être fixées de façons différentes et à un niveau longitudinal différent. Par exemple, les deux parties du piston 5 peuvent être séparables en partie inférieure de la portion 15 tubulaire (chemise), par exemple via un fond vissé. De même, le piston 5 peut être composé d'une seule pièce. De même, le piston 5 peut être composé de plus de deux pièces assemblées de façon séparable. Par exemple, l'extrémité supérieure peut être composée de plusieurs parties séparables et notamment en trois parties.

Cet ensemble avec la pièce support 9 peut être logé dans la portion de boîtier tubulaire 24 inférieur de la structure. L'entretoise 23 peut à cette occasion être montée autour du piston 5.

L'ensemble obtenu peut être ensuite surmonté de la portion de boîtier tubulaire 25 supérieure de la structure. L'extrémité supérieure du piston 5 est insérée dans la portion de boîtier tubulaires 25 supérieure (partie supérieure de la structure). Les deux parties 24, 25 de la structure peuvent être assemblées l'une à l'autre, par exemple par vissage, au niveau de deux extrémités comportant par exemple des brides d'assemblage.

Alternativement, l'entretoise 23 pourrait être montée au-dessus de la pièce support 9 puis l'extrémité supérieure du piston 5 pourrait être insérée dans la portion 25 supérieure de boîtier de la structure. La portion 24 inférieure de boîtier peut ensuite être assemblée à la portion 25 supérieure de boîtier.

Alternativement l'ensemble ne comporte pas d'entretoise 23.

Le piston 5 est de préférence guidé longitudinalement en partie supérieure dans la portion 25 supérieure de boîtier qui forme un fourreau. Ce guidage peut être assuré une ou des bagues de guidage interposées au contact du piston 5. Les bagues de guidage peuvent être composées de matériau à faible coefficient de frottement (par exemple PTFE et bronze ou PTFE et carbone). Le piston 5 peut être guidé longitudinalement également autour de la portion 15 tubulaire dans la portion 24 inférieure de boîtier (également avec une ou des bagues le cas échéant).

Un ensemble de joint(s) (par exemple des segments) portés par la partie inférieure de la portion tubulaire du piston peuvent assurer l'étanchéité avec la portion 24 inférieure de boîtier. Cet ensemble de joint(s) peut également contribuer au guidage longitudinal.

La pièce support 9 peut comporter une sortie 105 du fluide sous pression qui provient de la chambre 4 de compression et qui a transité par le guide 8 central, l'orifice 7 d'évacuation et à travers le corps de la pièce 9 support. Une conduite du circuit 11 d'évacuation peut être accordée à cette sortie 105 de fluide pour collecter et transporter le fluide comprimé vers une sortie de l'appareil 1 de compression.

Comme visible à la [Fig. 2], la portion 24 inférieure de boîtier peut comporter une ouverture latérale pour permettre le passage de cette conduite 11 et notamment son extrémité de raccordement à la pièce support 9. Cette fixation de la conduite à la sortie 105 de fluide peut être réalisée par exemple via un raccord vissé qui peut être associé à un joint par exemple de type métallique et énergisé. Bien entendu, tout autre type de raccord de fluide à haute pression de type « conique », « NPT » ou autre peut être envisagé.

La portion 25 supérieure de boîtier est fixe et peut être reliée rigidement ou faire partie de l'enceinte 13 contenant le bain de fluide cryogénique à pomper. En particulier, cette partie supérieure de la structure fixe peut comprendre ou constituer une bride supérieure de montage de l'enceinte 13.

L'actionneur 21 du piston 5 (moteur et mécanisme associé le cas échéant) peut être monté sur cette portion 25 supérieure de structure. L'actionneur 21 peut être accouplé mécaniquement à l'extrémité supérieure du piston 5 pour actionner ce dernier en translation et transmettre les efforts nécessaires aux différentes phases d'admission et compression du fluide.

L'effort mécanique principal qui est généré par le piston 5 (portion en forme de fourche et portion tubulaire délimitant la chambre de compression) lors de la compression dans la chambre 4 de compression (traction) est repris au niveau de l'extrémité du piston formant la chambre de compression. Cet effort est transmis à la pièce support 9 puis à l'entretoise 23 et à la portion supérieure 25 de structure.

L'agencement ci-dessus et son montage/démontage qui en résultent permettent un guidage et un alignement des pièces de mécanisme.

Le nombre de pièces est limité, le montage/démontage est simple.

La reprise des efforts (notamment en traction) est optimisée. Ceci concourt à une augmentation de la durée de vie des différents joints.

Bien entendu, l'invention n'est pas limitée aux exemples décrits ci-dessus. Ainsi, par exemple, l'entretoise 23 pourrait faire partie (monobloc ou non) de la portion de boîtier supérieure 25.

De même, la pièce support 9 et au moins une partie du guide central 8 pourraient être monoblocs à condition que la pièce résultante puisse être insérée à travers l'ouverture longitudinale 50.

Un appareil 1 de compression de ce type (ou plusieurs en série ou en parallèle) peut être utilisé dans toute installation cryogénique nécessitant de pomper ou comprimer un fluide cryogénique. Par exemple, une station de remplissage de réservoirs de gaz sous pression (hydrogène par exemple) peut comprendre une source 17 de gaz liquéfié, un circuit 18 de soutirage ayant une première extrémité reliée à la source et au moins une seconde extrémité destinée à être raccordée à un réservoir 190 à remplir, le circuit 18 de soutirage comprenant un tel appareil 1 de pompage. Le fluide pompé peut être vaporisé dans un échangeur 19 en aval et éventuellement stocké dans un ou plusieurs réservoirs 20 tampon sous pression.

## Revendications

1. Appareil (1) de compression de fluide, en particulier de fluide cryogénique, comprenant une chambre (4) de compression, un système (6) d'admission communiquant avec la chambre (4) de compression, un piston (5, 15) comprenant un corps axial mobile en translation selon une direction (A) longitudinale pour assurer la compression du fluide dans la chambre (4) de compression, le piston (5) étant mobile par rapport à une structure (24, 25) fixe de l'appareil (1), l'appareil (1) comprenant un orifice (7) d'évacuation communiquant avec la chambre (4) de compression et configuré pour permettre la sortie de fluide comprimé, le corps du piston (5) comprenant une portion tubulaire (15) montée autour d'un guide (8) central fixe relié à la structure (24, 25) fixe, l'appareil (1) comprenant un système d'étanchéité (10) formé entre le guide (8) central et la portion tubulaire (15) du piston (5), la chambre (4) de compression étant délimitée par la portion tubulaire (15) du piston (5) et une extrémité terminale du guide (8) central, le guide (8) central étant relié à la structure (24, 25) fixe via une pièce (9) support reçue dans une ouverture longitudinale (50) formée dans le corps du piston (5, 15) et permettant le coulissement longitudinal relatif du piston (5) autour de la pièce (9) support, **caractérisé en ce que**, lors des mouvements de translation du piston (5), le corps du piston (5) coulisse autour de la pièce (9) support sans passer au travers de la pièce support (9).

2. Appareil (1) selon la revendication 1, **caractérisé en ce que** l'ouverture longitudinale (50) du piston (5, 15) est délimitée par une portion du corps du piston (5) en forme de fourche à plusieurs branches (125), l'ouverture longitudinale (50) étant formée par l'espacement entre les branches (125).

3. Appareil (1) selon l'une quelconque des revendications 1 à 2, **caractérisé en ce que** la pièce (9) support s'étend transversalement à la direction (A) longitudinale entre deux extrémités latérales faisant saillie au-delà-du corps du piston (5), les deux extrémités latérales de la pièce (9) support étant reliées chacune à la structure (24, 25).

4. Appareil (1) selon l'une quelconque des revendications 1 à 3, **caractérisé en ce que** le guide (8) central est monté solidaire de la pièce (9) support par l'un au moins parmi : un vissage, un emboîtement, une déformation élastique, la pièce (9) support étant rendue solidaire de la structure (24, 25) fixe, par exemple par butée, emboîtement, serrage ou vissage.

5. Appareil (1) selon l'une quelconque des revendications 1 à 4, **caractérisé en ce que** la pièce (9) support est maintenue fixe longitudinalement dans la structure (24, 25) entre deux butées (123, 124) de maintien longitudinal situées de part et d'autre de la pièce (9) support selon une direction (A) longitudinale.

6. Appareil (1) selon l'une quelconque des revendications 1 à 5, **caractérisé en ce que** la structure comprend deux portions (24, 25) de boîtier tubulaires assemblées longitudinalement l'une à l'autre autour du piston (5).

7. Appareil (1) selon les revendications 5 et 6, **caractérisé en ce que** l'une au moins des deux portions (24, 25) de boîtier tubulaires forme une butée de maintien longitudinal à une extrémité longitudinale de la pièce (9) support.

8. Appareil (1) selon la revendication 6 ou 7, **caractérisé en ce qu'**il comporte une entretoise (23) montée autour du corps du piston (5), l'entretoise (23) étant disposée entre le corps du piston (5) et l'une au moins des deux portions (24, 25) de boîtier tubulaires, l'entretoise (23) formant une butée de maintien longitudinal à une extrémité longitudinale de la pièce (9) support.

9. Appareil (1) selon l'une quelconque des revendications 1 à 8, **caractérisé en ce que** la pièce (9) support est maintenue fixe transversalement à la direction (A) longitudinale par une butée (24) de maintien transversal formée par la structure (24, 25).

10. Appareil (1) selon l'une quelconque des revendications 1 à 9, **caractérisé en ce que** l'orifice (7) d'évacuation est situé au niveau de l'extrémité terminale du guide (8) central, l'appareil (1) comprenant un circuit (11) d'évacuation du fluide comprimé comprenant une première extrémité reliée à l'orifice (7) d'évacuation et une seconde extrémité située de façon opposée à la première extrémité selon la direction longitudinale (A), le circuit (11) d'évacuation du gaz comprimé transitant via le corps du guide (8) central et la pièce (9) support.

11. Appareil (1) selon l'une quelconque des revendications 1 à 10, **caractérisé en ce que** le corps du piston (5) est composé en plusieurs parties assemblées longitudinalement l'une à l'autre de façon démontable.

12. Appareil (1) selon les revendications 2 et 11, **caractérisé en ce que** la portion tubulaire (15) et la portion en forme de fourche du corps du piston (5) sont assemblées longitudinalement l'une à l'autre de façon démontable, par exemple par vissage.

13. Appareil (1) selon l'une quelconque des revendications 1 à 12, **caractérisé en ce qu'**il est du type à deux étages de compression et comprend une chambre (3) de pré-compression, un système (2) de pré-admission communiquant avec la chambre (3) de pré-compression configuré pour permettre l'entrée de fluide dans la chambre (3) de pré-compression, le système (6) d'admission communiquant avec la chambre (3) de pré-compression pour assurer le transfert de fluide comprimé dans la chambre (3) de pré-compression vers la chambre (4) de compression en vue d'une compression supplémentaire.

14. Appareil (1) selon l'une quelconque des revendications 1 à 13, **caractérisé en ce qu'**il comprend une enceinte (13) étanche reliée à la structure (24, 25) et configurée pour contenir un bain (16) de fluide cryogénique comportant une phase liquide et un ciel gazeux, la chambre (4) de compression étant logée dans l'enceinte (13) pour être immergée dans le bain (16).

15. Station de remplissage de réservoirs ou de conduites de gaz sous pression comprenant une source (17) de gaz liquéfié, notamment d'hydrogène liquéfié, un circuit (18) de soutirage ayant une première extrémité reliée à la source et au moins une seconde extrémité destinée à être raccordée à un réservoir (190) à remplir, le circuit (18) de soutirage comprenant un appareil (1) de pompage ou un appareil (1) de compression de fluide conforme à l'une quelconque des revendications 1 à 14.

## Patentansprüche

1. Eine Vorrichtung (1) zur Fluidkompression, insbesondere von kryogenem Fluid, umfassend eine Kompressionskammer (4), ein mit der Kompressionskammer (4) in Verbindung stehendes Einlasssystem (6), einen Kolben (5, 15), der einen axial translatorisch beweglichen Körper entlang einer Längsrichtung (A) umfasst, um die Kompression des Fluids in der Kompressionskammer (4) zu gewährleisten, wobei der Kolben (5) in Bezug auf eine feste Struktur (24, 25) der Vorrichtung (1) beweglich ist, wobei die Vorrichtung (1) eine Auslassöffnung (7) umfasst, die mit der Kompressionskammer (4) in Verbindung steht und so konfiguriert ist, dass sie den Austritt von komprimiertem Fluid ermöglicht, wobei der Körper des Kolbens (5) einen rohrförmigen Abschnitt (15) umfasst, der um eine feste zentrale Führung (8) montiert ist, die mit der festen Struktur (24, 25) verbunden ist, wobei die Vorrichtung (1) ein Dichtungssystem (10) umfasst, das zwischen der zentralen Führung (8) und dem rohrförmigen Abschnitt (15) des Kolbens (5) ausgebildet ist, wobei die Kompressionskammer (4) durch den rohrförmigen Abschnitt (15) des Kolbens (5) und ein terminales Ende der zentralen Führung (8) begrenzt ist, wobei die zentrale Führung (8) mit der festen Struktur (24, 25) über ein Stützteil (9) verbunden ist, das in einer Längsöffnung (50) aufgenommen ist, die im Körper des Kolbens (5, 15) ausgebildet ist und das relative Längsgleiten des Kolbens (5) um das Stützteil (9) ermöglicht, **dadurch gekennzeichnet, dass** bei den Translationsbewegungen des Kolbens (5) der Körper des Kolbens (5) um das Stützteil (9) gleitet, ohne durch das Stützteil (9) hindurchzugehen.

2. Die Vorrichtung (1) nach Anspruch 1, **dadurch gekennzeichnet, dass** die Längsöffnung (50) des Kolbens (5, 15) durch einen gabelförmigen Abschnitt des Kolbenkörpers (5) mit mehreren Zweigen (125) begrenzt ist, wobei die Längsöffnung (50) durch den Abstand zwischen den Zweigen (125) gebildet wird.

3. Die Vorrichtung (1) nach einem der Ansprüche 1 bis 2, **dadurch gekennzeichnet, dass** sich das Stützteil (9) quer zur Längsrichtung (A) zwischen zwei seitlichen Enden erstreckt, die über den Körper des Kolbens (5) hinausragen, wobei die beiden seitlichen Enden des Stützteils (9) jeweils mit der Struktur (24, 25) verbunden sind.

4. Die Vorrichtung (1) nach einem der Ansprüche 1 bis 3, **dadurch gekennzeichnet, dass** die zentrale Führung (8) mit dem Stützteil (9) durch mindestens eines der folgenden Verfahren fest verbunden ist: Verschrauben, Einpassen, elastische Verformung, wobei das Stützteil (9) mit der festen Struktur (24, 25) fest verbunden ist, beispielsweise durch Anschlag, Einpassung, Klemmung oder Verschraubung.

5. Die Vorrichtung (1) nach einem der Ansprüche 1 bis 4, **dadurch gekennzeichnet, dass** das Stützteil (9) in der Struktur (24, 25) zwischen zwei Längshalt-Anschlägen (123, 124), die sich auf beiden Seiten des Stützteils (9) entlang einer Längsrichtung (A) befinden, in Längsrichtung festgehalten wird.

6. Die Vorrichtung (1) nach einem der Ansprüche 1 bis 5, **dadurch gekennzeichnet, dass** die Struktur zwei rohrförmige Gehäuseabschnitte (24, 25) umfasst, die längs zueinander um den Kolben (5) montiert sind.

7. Die Vorrichtung (1) nach den Ansprüchen 5 und 6, **dadurch gekennzeichnet, dass** mindestens einer der beiden rohrförmigen Gehäuseabschnitte (24, 25) einen Längshalt-Anschlag an einem Längsende des Stützteils (9) bildet.

8. Die Vorrichtung (1) nach Anspruch 6 oder 7, **dadurch gekennzeichnet, dass** sie einen Abstandshalter (23) umfasst, der um den Körper des Kolbens (5) montiert ist, wobei der Abstandshalter (23) zwischen dem Körper des Kolbens (5) und mindestens einem der beiden rohrförmigen Gehäuseabschnitte (24, 25) angeordnet ist, wobei der Abstandshalter (23) einen Längshalt-Anschlag an einem Längsende des Stützteils (9) bildet.

9. Die Vorrichtung (1) nach einem der Ansprüche 1 bis 8, **dadurch gekennzeichnet, dass** das Stützteil (9) durch einen von der Struktur (24, 25) gebildeten Querhalteanschlag (24) quer zur Längsrichtung (A) festgehalten wird.

10. Die Vorrichtung (1) nach einem der Ansprüche 1 bis 9, **dadurch gekennzeichnet, dass** sich die Auslassöffnung (7) auf Höhe des terminalen Endes der zentralen Führung (8) befindet, wobei die Vorrichtung (1) einen Auslasskreislauf (11) für komprimiertes Fluid umfasst, der ein erstes Ende, das mit der Auslassöffnung (7) verbunden ist, und ein zweites Ende aufweist, das dem ersten Ende entlang der Längsrichtung (A) gegenüberliegt, wobei der Auslasskreislauf (11) für das komprimierte Gas durch den Körper der zentralen Führung (8) und das Stützteil (9) verläuft.

11. Die Vorrichtung (1) nach einem der Ansprüche 1 bis 10, **dadurch gekennzeichnet, dass** der Körper des Kolbens (5) aus mehreren Teilen besteht, die demontierbar längs zueinander montiert sind.

12. Die Vorrichtung (1) nach den Ansprüchen 2 und 11, **dadurch gekennzeichnet, dass** der rohrförmige Abschnitt (15) und der gabelförmige Abschnitt des Körpers des Kolbens (5) demontierbar längs zueinander montiert sind, beispielsweise durch Verschrauben.

13. Die Vorrichtung (1) nach einem der Ansprüche 1 bis 12, **dadurch gekennzeichnet, dass** sie vom Typ mit zweistufiger Kompression ist und eine Vorkompressionskammer (3), ein Voreinlasssystem (2), das mit der Vorkompressionskammer (3) in Verbindung steht und konfiguriert ist, um den Eintritt von Fluid in die Vorkompressionskammer (3) zu ermöglichen, umfasst, wobei das Einlasssystem (6) mit der Vorkompressionskammer (3) in Verbindung steht, um den Transfer von komprimiertem Fluid von der Vorkompressionskammer (3) zur Kompressionskammer (4) im Hinblick auf eine weitere Kompression zu gewährleisten.

14. Die Vorrichtung (1) nach einem der Ansprüche 1 bis 13, **dadurch gekennzeichnet, dass** sie ein abgedichtetes Gehäuse (13) umfasst, das mit der Struktur (24, 25) verbunden und konfiguriert ist, um ein Bad (16) aus kryogenem Fluid zu enthalten, das eine flüssige Phase und einen gasförmigen Kopfraum aufweist, wobei die Kompressionskammer (4) in dem Gehäuse (13) untergebracht ist, um in das Bad (16) eingetaucht zu werden.

15. Eine Füllstation für Behälter oder Leitungen von unter Druck stehendem Gas, umfassend eine Quelle (17) für verflüssigtes Gas, insbesondere verflüssigten Wasserstoff, einen Entnahmekreislauf (18) mit einem ersten Ende, das mit der Quelle verbunden ist, und mindestens einem zweiten Ende, das dazu bestimmt ist, mit einem zu füllenden Behälter (190) verbunden zu werden, wobei der Entnahmekreislauf (18) eine Pumpvorrichtung (1) oder eine Fluidkompressionsvorrichtung (1) nach einem der Ansprüche 1 bis 14 umfasst.

## Claims

1. A fluid compression apparatus (1), in particular for cryogenic fluid, comprising a compression chamber (4), an intake system (6) communicating with the compression chamber (4), a piston (5, 15) comprising an axially translating body movable in a longitudinal direction (A) to ensure the compression of the fluid in the compression chamber (4), the piston (5) being movable with respect to a fixed structure (24, 25) of the apparatus (1), the apparatus (1) comprising a discharge port (7) communicating with the compression chamber (4) and configured to allow the outlet of compressed fluid, the body of the piston (5) comprising a tubular portion (15) mounted around a fixed central guide (8) connected to the fixed structure (24, 25), the apparatus (1) comprising a sealing system (10) formed between the central guide (8) and the tubular portion (15) of the piston (5), the compression chamber (4) being delimited by the tubular portion (15) of the piston (5) and a terminal end of the central guide (8), the central guide (8) being connected to the fixed structure (24, 25) via a support piece (9) received in a longitudinal opening (50) formed in the body of the piston (5, 15) and allowing the relative longitudinal sliding of the piston (5) around the support piece (9), **characterized in that**, during the translational movements of the piston (5), the body of the piston (5) slides around the support piece (9) without passing through the support piece (9).

2. The apparatus (1) according to claim 1, **characterized in that** the longitudinal opening (50) of the piston (5, 15) is delimited by a fork-shaped portion of the piston body (5) with several branches (125), the longitudinal opening (50) being formed by the spacing between the branches (125).

3. The apparatus (1) according to any one of claims 1 to 2, **characterized in that** the support piece (9) extends transversely to the longitudinal direction (A) between two lateral ends projecting beyond the body of the piston (5), the two lateral ends of the support piece (9) each being connected to the structure (24, 25).

4. The apparatus (1) according to any one of claims 1 to 3, **characterized in that** the central guide (8) is mounted integrally with the support piece (9) by at least one of: screwing, fitting, elastic deformation, the support piece (9) being made integral with the fixed structure (24, 25), for example by stopping, fitting, clamping or screwing.

5. The apparatus (1) according to any one of claims 1 to 4, **characterized in that** the support piece (9) is held longitudinally fixed in the structure (24, 25) between two longitudinal retaining stops (123, 124) located on either side of the support piece (9) along a longitudinal direction (A).

6. The apparatus (1) according to any one of claims 1 to 5, **characterized in that** the structure comprises two tubular housing portions (24, 25) assembled longitudinally to one another around the piston (5).

7. The apparatus (1) according to claims 5 and 6, **characterized in that** at least one of the two tubular housing portions (24, 25) forms a longitudinal retaining stop at a longitudinal end of the support piece (9).

8. The apparatus (1) according to claim 6 or 7, **characterized in that** it comprises a spacer (23) mounted around the body of the piston (5), the spacer (23) being disposed between the body of the piston (5) and at least one of the two tubular housing portions (24, 25), the spacer (23) forming a longitudinal retaining stop at a longitudinal end of the support piece (9).

9. The apparatus (1) according to any one of claims 1 to 8, **characterized in that** the support piece (9) is held transversely fixed to the longitudinal direction (A) by a transverse retaining stop (24) formed by the structure (24, 25).

10. The apparatus (1) according to any one of claims 1 to 9, **characterized in that** the discharge port (7) is located at the level of the terminal end of the central guide (8), the apparatus (1) comprising a compressed fluid discharge circuit (11) comprising a first end connected to the discharge port (7) and a second end located opposite the first end along the longitudinal direction (A), the discharge circuit (11) for the compressed gas passing via the body of the central guide (8) and the support piece (9).

11. The apparatus (1) according to any one of claims 1 to 10, **characterized in that** the body of the piston (5) is composed of several parts assembled longitudinally to one another in a removable manner.

12. The apparatus (1) according to claims 2 and 11, **characterized in that** the tubular portion (15) and the fork-shaped portion of the body of the piston (5) are assembled longitudinally to one another in a removable manner, for example by screwing.

13. The apparatus (1) according to any one of claims 1 to 12, **characterized in that** it is of the two-stage compression type and comprises a pre-compression chamber (3), a pre-intake system (2) communicating with the pre-compression chamber (3) configured to allow the entry of fluid into the pre-compression chamber (3), the intake system (6) communicating with the pre-compression chamber (3) to ensure the transfer of compressed fluid from the pre-compression chamber (3) to the compression chamber (4) for further compression.

14. The apparatus (1) according to any one of claims 1 to 13, **characterized in that** it comprises a sealed enclosure (13) connected to the structure (24, 25) and configured to contain a bath (16) of cryogenic fluid comprising a liquid phase and a gaseous head, the compression chamber (4) being housed in the enclosure (13) to be immersed in the bath (16).

15. A filling station for tanks or conduits of gas under pressure, comprising a source (17) of liquefied gas, in particular liquefied hydrogen, a withdrawal circuit (18) having a first end connected to the source and at least a second end intended to be connected to a tank (190) to be filled, the withdrawal circuit (18) comprising a pumping apparatus (1) or a fluid compression apparatus (1) according to any one of claims 1 to 14.
